# FASCICULE DE BREVET EUROPEEN

(11) **EP 3 271 211 B1**
(45) Date de publication et mention de la délivrance du brevet: **15.07.2020**
(21) Numéro de dépôt: 16704850.3
(22) Date de dépôt: 17.02.2016
(51) Int. Cl.: B60Q 1/00, B60Q 1/20, F21S 43/14, F21S 43/237, F21S 43/245, F21S 43/247, F21S 43/20

(54) **SYSTÈME D'ÉCLAIRAGE ET/OU DE SIGNALISATION POUR VÉHICULES AUTOMOBILES**
BELEUCHTUNGS- UND/ODER SIGNALISIERUNGSSYSTEM FÜR KRAFTFAHRZEUGE
LIGHTING AND/OR SIGNALING SYSTEM FOR MOTOR VEHICLES

(30) Priorité: 17.02.2015 FR 1551306
(43) Date de publication de la demande: 24.01.2018
(73) Titulaire: Valeo Vision Belgique, 7822 Meslin l'Evêque (BE)
(72) Inventeur: VALOIS, Christophe, 59178 Hasnon (FR); SACCHET, Dirkie, 7190 Ecaussinnes (BE); GRIGORESCU, Beny, 1410 Waterloo (BE)
(86) Numéro de dépôt international: PCT/EP2016/053396
(87) Numéro de publication internationale: WO 2016/131891

(56) Documents cités:
- DE-A1- 10 109 357
- DE-A1-102005 050 420
- GB-A- 2 245 697
- US-A1- 2007 047 249

## Description

La présente invention est relative notamment à un système d'éclairage et/ou de signalisation.

Une application préférée concerne l'industrie automobile, pour l'équipement de véhicules, en particulier pour la réalisation de dispositifs susceptibles de pouvoir émettre plusieurs faisceaux lumineux, encore appelés fonctions d'éclairage, répondant en général à des réglementations.

Notamment l'invention peut permettre la production d'un faisceau du type antibrouillard en combinaison avec une fonction dite de style, d'intensité bien plus faible.

Les dispositifs d'éclairage et de signalisation connus sont jusqu'à présent prévus pour émettre par exemple :
- un faisceau de croisement, caractérisé par une absence de lumière au-dessus d'un plan incliné de 1% vers le bas du côté de la circulation dans l'autre sens, et d'un autre plan incliné de 15 degrés par rapport au précédent du côté de la circulation dans le même sens, ces deux plans définissant une coupure conforme à la réglementation européenne;
- un faisceau de route dépourvu de coupure, et caractérisé par un éclairement maximal dans l'axe du véhicule ;
- un faisceau d'éclairage pour temps de brouillard, caractérisé par une coupure plate et une grande largeur d'éclairement ;
- un faisceau de signalisation pour la circulation en ville, encore appelé lampe de ville ;
- un faisceau de signalisation pour indiquer l'intention du conducteur de changer de direction ou de file de circulation ;
- un faisceau d'éclairage de jour également dénommée par son acronyme DRL (de l'anglais Daytime Running Light). On notera que l'évolution des exigences en matière de signalisation des véhicules automobiles, par exemple le règlement sur les feux diurnes de la Communauté Européenne intitulé "ECE régulation R87: Daytime Running Lamp" désigné ci-après par l'abréviation DRL, pose différents problèmes en matière de réalisation d'une telle fonction DRL, imposant aux véhicules l'allumage permanent de feux de signalisation relativement puissants lors de la circulation de jour;
- un faisceau dit « faisceau route additionnel » apte à fournir un faisceau lumineux tel que, lorsqu'on le juxtapose à un faisceau de croisement, on obtient un faisceau satisfaisant aux normes d'éclairement des faisceaux de route.

Actuellement, lorsque l'on souhaite produire différentes fonctions d'éclairage et/ou de signalisation, il faut généralement recourir à des dispositifs séparés à associer dans un même volume de projecteur de phare. On comprend que l'encombrement d'une telle association est important. Une autre possibilité est décrite dans DE A1 102005050420 avec une source unique dont la lumière émise est partagée entre une lentille de projection d'un faisceau principal, la lentille étant montée sur un corps de projecteur, et un guide d'onde. Ce dernier est un aileron mince fixé au corps du projecteur qui comporte une cavité complexe entre la source et la lentille de sorte à dévier, par réflexion, des rayons de la source vers l'entrée du guide d'onde.

Ce dispositif est complexe car il impose une conception très particulière du projecteur pour la fixation du guide d'onde et pour la réflexion de la lumière vers ce dernier. Cela le rend peu adaptable selon les formes et fonctions des projecteurs. En outre, malgré une cavité de réflexion et une entrée de guide d'onde complexes, la lumière récupérée par ce dernier reste très faible.

US 2007/0047249 A1 montre également un système d'éclairage et de signalisation avec une source unique, dont la lumière émise est partagée entre une lentille de projection et un guide d'onde.

L'invention permet de résoudre tout ou partie des inconvénients des techniques actuelles.

Elle concerne en particulier un système d'éclairage et/ou de signalisation pour véhicules automobiles, comportant les caractéristiques de la revendication 1.

De façon avantageuse, ce système est tel qu'une zone de couplage du guide d'onde est située au moins en partie et éventuellement totalement en regard d'une portion de l'une parmi la face d'entrée de la lentille et la face de sortie de la lentille.

L'invention peut ainsi être employée dans divers types de projecteur sans que l'impact de l'ajout d'un guide d'onde pour une fonction secondaire ne rende trop complexe la modification de conception. Par exemple, même sur la base d'une fonction antibrouillard à inclinaison réglable, la fonction supportée par le guide d'onde ne gêne pas la fonction principale d'antibrouillard.

D'une manière générale, la zone de couplage est une zone du guide agencée pour coupler des rayons lumineux dans le guide, c'est-à-dire agencée pour dévier des rayons atteignant cette zone de couplage dans le guide de sorte que ces rayons lumineux se propagent à l'intérieur du guide par réflexion totale interne. Suivant une possibilité, la zone de couplage s'étend depuis la face d'entrée du guide et, de préférence comprend, en aval de cette face d'entrée, une zone de collimatage et/ou de concentration de rayons entrés, de sorte à alimenter le guide d'ondes en lumière.

Suivant un mode de réalisation, le deuxième faisceau permet de réaliser une deuxième fonction d'éclairage et/ou de signalisation de préférence réglementaire.

Eventuellement, la deuxième fonction d'éclairage et/ou de signalisation réglementaire est distincte de la première fonction d'éclairage et/ou de signalisation réglementaire.

Suivant une autre possibilité non limitative, le deuxième faisceau est dépourvu de fonction d'éclairage et/ou de signalisation réglementaire.

Selon l'invention, la lentille et le guide d'onde sont montés sur un corps. Ce dernier peut être monté mobile en rotation dans ledit système, par exemple pour permettre à l'ensemble formé du guide et de la lentille de suivre un mouvement, suivant au moins une direction de pivot.

Le guide d'onde peut être monté mobile en rotation sur le corps.

Suivant un mode de réalisation, la zone de couplage du guide d'onde est formée par au moins une partie de la face d'entrée du guide d'onde.

La zone de couplage du guide d'onde est éventuellement formée par au moins une partie du guide d'onde en forme de coude.

Suivant une possibilité alternative ou combinable à tout autre aspect de l'invention, la face d'entrée du guide d'onde est située à l'embouchure d'une partie de la zone de couplage dotée d'une portion de section dégressive depuis la face d'entrée jusqu'à un corps allongé sur laquelle la surface de sortie du guide d'onde est située.

Cette forme d'entrée de guide d'onde permet de capter une quantité importante de la lumière issue de la source sans pour autant recourir nécessairement à des moyens complexes tels que des déviations de rayons lumineux.

Dans un cas préféré, la face d'entrée du guide d'onde présente une courbure concave dans un plan comportant la direction moyenne d'émission de la source et l'axe de rotation de la mobilité relative de la lentille et du guide d'onde. Cette courbure peut permettre d'épouser au mieux le contour de la face coopérante de la lentille et/ou de ne pas gêner le débattement en rotation de la lentille. Cela optimise en outre la quantité de lumière récupérée par le guide d'onde.

Selon un mode de réalisation alternatif ou combinable à tout autre mode de réalisation de l'invention, la face d'entrée du guide d'onde comprend au moins une cavité. Dans un cas préféré la face d'entrée du guide d'onde comprend au moins deux cavités, préférentiellement les cavités seront alors disposées de part et d'autre du centre de la face d'entrée du guide d'onde Dans un cas particulier, chaque cavité présente une forme sensiblement hémisphérique.

La présence d'une ou plusieurs cavité(s) sur la face d'entrée du guide d'onde, préférentiellement de forme sensiblement hémisphérique, permet de diffuser la lumière en entrée du guide d'onde et donc d'homogénéiser la lumière au sein du guide d'onde.

Suivant un mode de réalisation, au moins un cache intermédiaire obture une portion de la face de sortie du guide d'onde. Ce ou ces caches permettent soit de limiter ou supprimer le chevauchement entre les premier et deuxième faisceaux, soit de créer des effets de style en générant des discontinuités d'émission de lumière le long du guide d'onde.

D'autres caractéristiques optionnelles du système d'éclairage et/ou de signalisation selon l'invention qui peuvent être mises en oeuvre de façon combinée ou alternative sont indiquées ci-après :
- la face d'entrée du guide d'onde est configurée pour que sa projection orthogonale dans un plan perpendiculaire à l'axe optique de la lentille chevauche une projection orthogonale de ladite une au moins parmi la face d'entrée de la lentille et la face de sortie de la lentille dans ledit plan perpendiculaire ;
- la surface de sortie du guide d'onde est située sur un corps allongé du guide d'onde ;
- la surface de sortie comporte des moyens de découplage de la lumière ;
- les moyens de découplage comprennent au moins un élément choisi parmi des prismes et/ou des stries et/ou des formes aléatoires. Les formes aléatoires sont par exemple des formes prédéterminées, qui se différencient par leur dimensions et/ou par leur géométrie, appliquées de manière aléatoire au guide d'ondes, c'est-à-dire qu'il n'y a pas de répartition ou de choix volontaire des formes du ou de ces moyens de découplage sur le guide d'ondes ;
- la section du corps allongé est inférieure à la section de la face d'entrée du guide d'onde ;
- la face d'entrée du guide d'onde est située à l'embouchure d'une portion de section dégressive depuis la face d'entrée jusqu'au corps allongé ;
- la face d'entrée du guide d'onde présente une courbure concave dans un plan comportant la direction moyenne d'émission de la source et l'axe de rotation de la mobilité relative de la lentille et du guide d'onde ;
- la face d'entrée du guide d'onde est une surface située en regard d'une portion de la face de sortie de la lentille ;
- la face de sortie de la lentille est convexe et a une courbure identique à celle de la face d'entrée du guide d'onde dans un plan comportant la direction moyenne d'émission de la source et l'axe de rotation de la mobilité relative de la lentille et du guide d'onde ;
- la face d'entrée du guide d'onde est une surface située en regard d'une portion de la face d'entrée de la lentille ;
- au moins un cache intermédiaire obture une portion de la face de sortie du guide d'onde ;
- plusieurs caches intermédiaires sont espacés le long de la face de sortie du guide d'onde ;
- un cache intermédiaire est configuré pour obturer une portion de la face de sortie du guide d'onde à l'extrémité amont de ladite face de sortie suivant le sens de propagation de la lumière dans le guide d'onde ;
- le premier faisceau de sortie est un faisceau du type feu antibrouillard ;
- le deuxième faisceau de sortie est un faisceau du type fonction de style.

Dans les caractéristiques exposées ci-dessus et dans la description ci-après, les termes relatifs à la verticalité, l'horizontalité et à la transversalité, s'entendent par rapport à la position dans laquelle le système d'éclairage et/ou de signalisation est destiné à être monté dans un véhicule

L'invention est aussi relative à un véhicule équipé d'au moins un dispositif tel qu'introduit ci-dessus.

Le dispositif peut être intégré dans un projecteur de phare.

D'autres caractéristiques, buts et avantages de la présente invention apparaîtront à la lecture de la description détaillée qui suit, et en regard des dessins annexés donnés à titre d'exemples non limitatifs et sur lesquels :
- la figure 1 montre en coupe un premier mode de réalisation de l'invention.
- Le figure 2 en donne une illustration en vue de face ;
- La figure 3 présente un autre mode de réalisation de l'invention suivant une coupe semblable à celle de la figure 1 ;
- La figure 4 illustre une vue de face du mode de réalisation de la figure 3 ;
- La figure 5 révèle un exemple de portion d'embouchure que le guide d'onde peut présenter ;
- La figure 6 présente un exemple d'implantation de l'ensemble d'émission de lumière dans un corps de projecteur, dans une coupe en perspective ;
- La figure 7 présente un autre mode de réalisation de l'invention suivant une coupe semblable à celle de la figure 1.

D'une manière générale, la présente invention peut utiliser une source lumineuse du type diode électroluminescente encore communément appelée LED. Notamment, cette LED peut être dotée d'au moins une puce apte à émettre une lumière d'intensité avantageusement ajustée selon la fonction d'éclairage et/ou de signalisation à réaliser. Par ailleurs, le terme source lumineuse s'entend ici d'un ensemble d'au moins une source élémentaire telle une LED apte à produire un flux conduisant à générer en sortie du dispositif de l'invention au moins un flux de sortie remplissant au moins une fonction souhaitée. La source est associée généralement à un support, des moyens de connectique ainsi qu'à des moyens de dissipation de chaleur. Préférentiellement, la source est configurée pour émettre suivant une direction moyenne d'émission qui est perpendiculaire au plan de la puce de la LED si cette technique de source est employée.

Les termes « vertical » et « horizontal » sont utilisés dans la présente description pour désigner des directions, suivant une orientation perpendiculaire au plan de l'horizon pour le terme « vertical », et suivant une orientation parallèle au plan de l'horizon pour le terme « horizontal ». Elles sont à considérer dans les conditions de fonctionnement du dispositif dans un véhicule. L'emploi de ces mots ne signifie pas que de légères variations autour des directions verticale et horizontale soient exclues de l'invention. Par exemple, une inclinaison relativement à ces directions de l'ordre de + ou - 10° est ici considérée comme une variation mineure autour des deux directions privilégiées.

Le terme « bas » ou partie basse s'entend généralement d'une partie d'un élément de l'invention située, suivant un plan vertical, en dessous de l'axe optique. Le terme « haut » ou partie haute s'entend d'une partie d'un élément de l'invention située, suivant un plan vertical, au-dessus de l'axe optique. Le terme « parallèle » ou la notion d'axes ou lignes confondues s'entend ici notamment avec les tolérances de fabrication ou de montage, des directions sensiblement parallèles ou des axes sensiblement confondus entrent dans ce cadre.

Les éléments du système tels qu'ici décrits forment tout ou partie d'au moins deux faisceaux réalisant deux fonctions d'éclairage et/ou de signalisation. Cela n'exclut pas que d'autres moyens, notamment optiques, soient intercalés entre lesdits éléments et une zone terminale de projection sur le chemin optique des rayons issus des éléments. En outre, les fonctions d'éclairage peuvent obéir à des dispositions réglementaires, par exemple la norme ECE régulation R87: Daytime Running Lamp ou d'autres normes européennes ou d'autres pays ou régions. Les fonctions de style n'obéissent habituellement pas à des normes compte tenu qu'elles n'ont généralement pas de fonction d'éclairage et/ou de signalisation mais uniquement un intérêt esthétique.

D'une manière générale, les termes tels que face d'entrée ou face de sortie ou surface de sortie s'entendent de surfaces de composants définissant avec un milieu alentours des dioptres pour la propagation d'ondes lumineuses. Il s'agit donc de surfaces optiquement utiles, c'est-à-dire au niveau desquelles des rayons lumineux transitent. Ces surfaces peuvent être entourées de surfaces inactives optiquement, par exemple une monture de lentille. Ainsi l'expression selon laquelle la face d'entrée 31 du guide d'onde 3 consiste en une surface située en regard d'une portion de l'une parmi la face d'entrée 21 de la lentille 2 et la face de sortie de la lentille 2 implique que la face d'entrée 31 du guide d'onde 3 occulte en partie le premier faisceau passant par la lentille 2 (ou occupe un espace où les rayons de la source 1 participeraient au premier faisceau en l'absence de la surface d'entrée 31 du guide d'onde 3).

Le système de l'invention peut aussi servir à former d'autres fonctions d'éclairage en-dehors des premier et deuxième faisceaux décrits en détail ci-après.

Dans les exemples représentés aux différentes figures, le premier faisceau 5 correspond typiquement à l'émission d'un faisceau lumineux de fonction antibrouillard. Le deuxième faisceau 6 correspond quant à lui à une fonction de style, c'est-à-dire une émission lumineuse répartie sur une face de sortie d'un guide d'ondes ayant une portion allongée de sorte à produire une émission lumineuse généralement de faible amplitude et permettant de souligner la forme d'une partie du projecteur, généralement à des fins esthétiques.

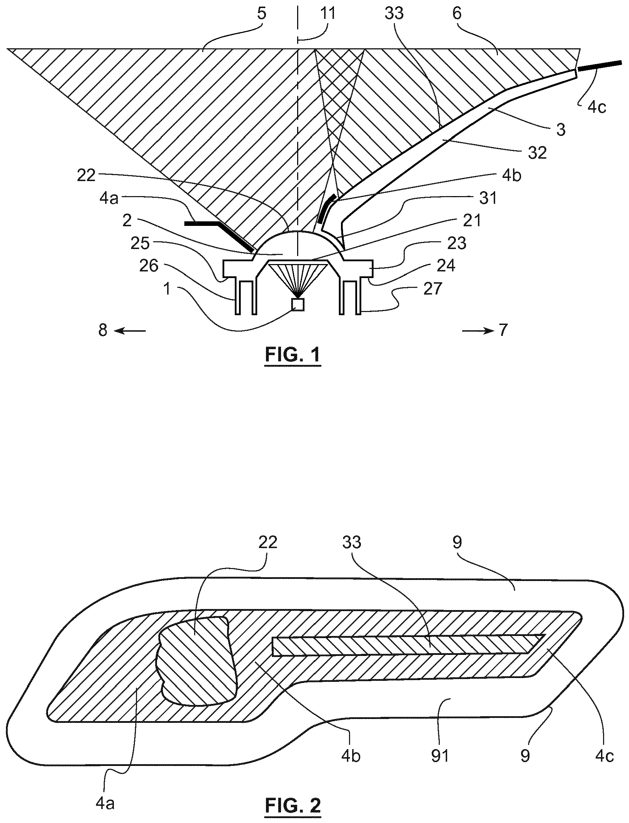

Dans le cas de la figure 1, une source lumineuse 1, qui peut être du type précédemment décrit et notamment formé par une diode électroluminescente, est positionnée en amont d'un système optique de génération du premier faisceau 5. Dans l'exemple, ce système optique comprend une lentille 2 notamment du type plan convexe. La face d'entrée 21 reçoit les rayons lumineux émis par la source 1 ; elle est ici plane. Un dioptre de sortie est formé au niveau de la face de sortie 22 de la lentille 2 qui a pour l'exemple une forme convexe. Le faisceau de sortie 5 ainsi constitué est du type divergent. Il est entendu que l'invention n'exclut pas que des moyens optiques supplémentaires soient présents, soit entre la source 1 et la lentille 2, soit en aval de la lentille 2. Par exemple, des moyens de réflexion pourraient être présents le long du parcours de propagation des rayons lumineux.

Dans le cas d'une application à des phares antibrouillard et éventuellement à d'autres types de fonction de signalisation et/ou d'éclairage, il est avantageux que l'émission du premier faisceau 5 soit réglable en inclinaison, en particulier suivant la verticale. A cet effet, dans l'exemple de la figure 1, la lentille 2 coopère avec un axe de pivot 23 matérialisé par des montures latérales 24, 25 sous forme de protubérances circulaires réalisant chacune un palier permettant le pivot de la lentille 2 suivant l'axe 23. Dans cet exemple, des moyens de transmission de mouvement de rotation sont prévus avec des pattes d'entraînement 26, 27 organisées par paires au niveau de chacune des montures latérales 24, 25. De façon non illustrée, chaque paire de pattes d'entraînement 26, 27 peut coopérer avec un système de transmission de mouvement par exemple par vis sans fin s'intégrant à l'intérieur de pattes d'une paire 26, 27. Ces parties de monture et d'entraînement de la lentille 2 ne font pas partie du système optique actif et notamment de la face d'entrée 21 et de la face de sortie 22 de la lentille 2. Généralement, ces parties seront périphériques relativement à la lentille 2.

Outre le premier faisceau ainsi généré, la présente invention réalise l'émission d'un deuxième faisceau 6. Ce dernier est produit au moyen d'un guide d'ondes 3 présentant, dans le cas de la figure 1, une face d'entrée 31 par laquelle des rayons lumineux peuvent être admis, et un corps allongé 32 au niveau duquel une face de sortie 33 produit l'émission du deuxième faisceau 6. Avantageusement, aussi bien le premier et le deuxième faisceaux 5, 6 émettent vers l'avant du véhicule sensiblement dans la même direction.

Avantageusement, le guide d'onde 3 est configuré pour produire une émission lumineuse sur une portion de l'espace de section moins large que celle du premier faisceau 5. Par contre, il est avantageux que le guide d'onde 3 produise une émission répartie suivant sa longueur de sorte à émettre de la lumière le long du guide d'onde 3, depuis une extrémité placée à proximité de la face d'entrée 31 jusqu'à une extrémité distale. Par exemple, en figure 1, le guide d'onde s'étend suivant une direction longitudinale dans un plan contenant la direction moyenne d'émission 11 de la source lumineuse 1 et coupant la lentille 2 transversalement. Toujours dans cet exemple, le corps allongé 32 du guide d'onde 3 s'étend depuis la face d'entrée 31 vers une partie plus à l'intérieur 7 du véhicule à l'opposé de l'extérieur 8 du véhicule. Ainsi, relativement au véhicule équipé, l'émission produite par le guide d'onde 3 est répartie suivant une direction dirigée vers le centre de la face avant (ou de la face arrière) du véhicule.

D'une manière générale, la face d'entrée 31 du guide d'onde 3 est configurée pour capter une partie des rayons lumineux normalement destinés à participer au premier faisceau 5. A cet effet, dans le mode de réalisation de la figure 1, la face d'entrée 31 est située, en aval de la face de sortie 22 de la lentille 2 de sorte à capter une partie des rayons du premier faisceau 5 et à les introduire dans le guide d'onde 3. La face d'entrée 31 est donc située de sorte à interférer avec le chemin de certains rayons lumineux normalement destinés au premier faisceau 5. En particulier, dans cet exemple, la face d'entrée 31 est située en regard de la face de sortie 22 de la lentille 2. En outre, il peut être avantageux de donner à la face d'entrée 31 une forme particulière permettant d'augmenter la quantité de lumière admise dans le guide d'onde 3. Ainsi, dans la vue en coupe de la figure 1, la face d'entrée 31 comporte une courbure, ici concave, adaptée à la courbure de la face de sortie 22 de la lentille 2. On voit immédiatement que ces deux portions de surface coopèrent en étant relativement similaires dans leur courbure, voire totalement identiques. Par ailleurs, le guide d'onde 3 peut comporter une portion 34 réalisant un évasement depuis le corps allongé 32 au niveau duquel s'opère la sortie des rayons lumineux vers la face d'entrée 31. Cette portion 34 évasée a une section dégressive depuis la face d'entrée 31 jusqu'au corps allongé 32. Ce dernier n'est d'ailleurs pas forcément de section constante suivant sa direction longitudinale. La forme en entonnoir de la portion 34 permet de concentrer progressivement les rayons lumineux introduits par la face d'entrée 31.

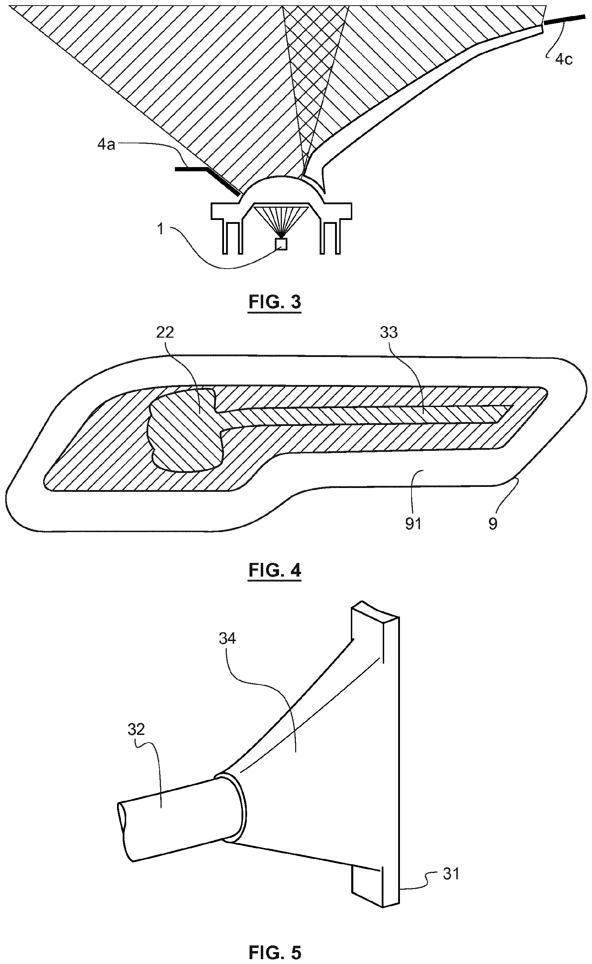

Dans le cas représenté à la figure 5, la face d'entrée 31 présente la courbure précédemment indiquée suivant une première direction de coupe correspondant à celle de la figure 1 et présente une section sensiblement rectiligne suivant un plan de coupe perpendiculaire au précédent. On notera que la face d'entrée 31 est avantageusement configurée et située relativement à la lentille 2 de sorte à ne pas interférer lors de la mobilité en rotation de la lentille 2.

Un autre aspect de l'invention est la présence éventuelle de caches dont des parties sont visibles aux repères 4a, 4b et 4c en figure 1 ainsi qu'en figure 2. D'une façon générale, ces portions de cache 4a, 4b, 4c peuvent être portées par un seul élément, par exemple en matière plastique, par exemple de couleur sombre et éventuellement noire, réalisant une opacité lumineuse. Un exemple de la pièce plastique formant les caches 4a, 4b, 4c est visible en vue de face en figure 2. On notera que la portion de cache 4b permet de former une discontinuité visuelle entre la face de sortie 22 de la lentille 2 et la face de sortie 33 du guide d'onde 3. Ces deux parties sont fonctionnellement différentes et espacées en vue frontale du projecteur qui en est équipé.

Les parties de cache 4a, 4c permettent, si elles sont présentes, de délimiter le contour des faces de sortie 22 et 33.

Une variante du mode de réalisation des figures 1 et 2 est montrée respectivement au niveau des figures 3 et 4, au niveau desquelles on constate l'absence du cache 4b si bien que visuellement, en vue de front, les surfaces de sortie 22 et 33, respectivement de la lentille 2 et du guide d'onde 3, se suivent d'une façon continue pour un observateur placé devant le projecteur.

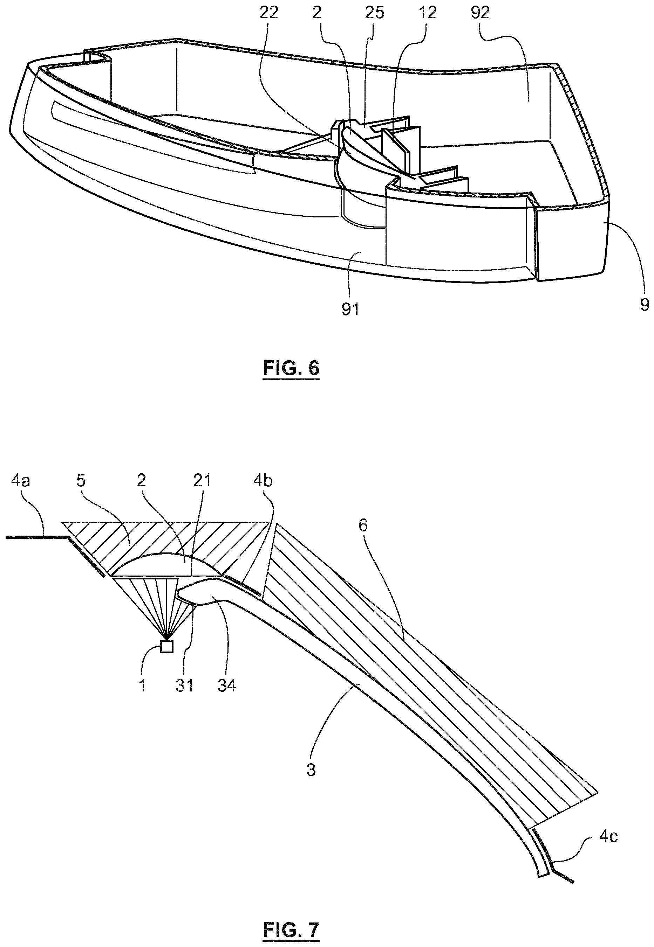

D'une façon générale, le système ici décrit associant une lentille 2 et un guide d'onde 3 de manière spécifique peut être intégré dans un corps 9 de projecteur dont une forme de contour est visible par exemple aux figures 2 et 4 avec une façade 91 et dont une vue en coupe et en perspective est donnée en figure 6. A cette figure, un châssis 92 du corps 9 est conformé de sorte à définir un espace intérieur de réception du système de l'invention, et en particulier de la lentille 2 de la source 1, du guide d'onde 3 et des éventuels caches 4a, 4b et 4c. Lesquels, comme indiqué précédemment sont conformés dans une seule et même pièce sous forme de nappe avantageusement en matière plastique. La figure 6 montre en outre la formation d'un support 12 permettant de recevoir la source lumineuse 1, en particulier s'il s'agit d'une diode électroluminescente. La façade 91 du corps 9 présente avantageusement une fenêtre en matière transparente ou translucide permettant la sortie des premier et deuxième faisceaux 5, 6.

La figure 7 illustre un autre mode de réalisation de l'invention constituant une variante relativement aux cas des figures précédentes, en particulier dans le positionnement relatif de la lentille 2 et du guide d'onde 3. En effet, en figure 7, le guide d'onde 3 est positionné de sorte à ce que sa face d'entrée 31 soit située en amont de la lentille 2 relativement au chemin des rayons lumineux de la source 1. Ainsi, dans cette configuration, la face d'entrée 31 interfère de sorte à ce qu'une partie des rayons lumineux devant normalement atteindre la face d'entrée 21 de la lentille 2, entre dans le guide d'onde 3. Ce dernier est donc placé de sorte à masquer partiellement la face d'entrée 21. Dans ce cas de figure, contrairement au cas précédent, le guide d'onde 3 peut par exemple s'étendre depuis la face d'entrée 31 vers l'arrière du projecteur alors qu'il s'étend préférentiellement vers l'avant du projecteur dans les modes de réalisation des figures 1 à 4.

Pour le reste, le mode de réalisation de la figure 7 peut présenter tout ou partie des caractéristiques décrites précédemment pour les autres modes de réalisation, en particulier avec la présence de caches 4a, 4b, 4c. La lentille 2 peut également être du type plan convexe.

On notera que dans les différentes variantes de l'invention, il est avantageux que le guide d'onde soit indépendant de la mobilité de la lentille 2, de sorte à ne pas modifier le positionnement de la face de sortie 33 du guide d'onde 3 même lorsque la lentille 2 est modifiée en inclinaison. Ainsi, les premier et deuxième faisceaux 5, 6 sont indépendants. Cette indépendance ne gêne cependant pas l'efficacité du système ainsi construit puisque la face d'entrée 31 du guide d'onde 3 telle qu'elle est constituée permet la récupération de lumière souhaitée par le guide d'onde 3.

Ainsi à partir d'une seule source lumineuse 1, on peut produire simultanément les deux faisceaux 5, 6. Dans le même temps, la présence du deuxième faisceau 6 ne gêne pas fonctionnellement le premier faisceau 5 qui est réglable en inclinaison. D'une manière générale, on pourra utiliser des matériaux plastiques du type polycarbonate ou équivalents pour les différentes parties optiques du système et notamment la lentille 2 et le guide d'onde 3. La dimension de la face d'entrée 31 sera par ailleurs configurée suivant la quantité de lumière souhaitée pour le guide d'onde 3.

### REFERENCES

- 1.: Source
- 11.: Direction moyenne
- 12.: Support
- 2.: Lentille
- 21.: Face d'entrée
- 22.: Face de sortie
- 23.: Axe de pivot
- 24.: Monture latérale
- 25.: Monture latérale
- 26.: Pattes d'entraînement
- 27.: Pattes d'entraînement
- 3.: Guide d'onde
- 31.: Face d'entrée
- 32.: Corps allongé
- 33.: Surface de sortie
- 34.: Portion d'entrée
- 4a, b, c :: Cache
- 5.: Premier faisceau
- 6.: Deuxième faisceau
- 7.: Zone intérieure
- 8.: Zone extérieure
- 9.: Corps
- 91.: Façade
- 92.: Châssis

## Revendications

1. Système d'éclairage et/ou de signalisation pour véhicules automobiles, comportant une source lumineuse (1), un corps (9), une lentille (2) configurée pour recevoir des rayons lumineux issus directement ou indirectement de la source (1) par une face d'entrée (21) et pour émettre un premier faisceau de sortie (5) réalisant une première fonction d'éclairage et/ou de signalisation réglementaire par une face de sortie (22), et un guide d'onde (3) configuré pour recevoir directement ou indirectement des rayons lumineux issus de la source (1) par une face d'entrée (31), pour émettre un deuxième faisceau de sortie (6) par une surface de sortie (33), et pour dévier des rayons lumineux dans le guide par une zone de couplage de sorte que ces rayons se propagent à l'intérieur du guide par réflexion totale interne, ladite zone de couplage du guide d'onde (3) étant située au moins en partie en regard d'une portion de l'une parmi la face d'entrée (21) de la lentille (2) et la face de sortie (22) de la lentille (2), la lentille (2) et le guide d'onde (3) étant montés sur le corps (9), **caractérisé en ce que** la lentille (2) est montée sur le corps mobile en rotation relativement au guide d'onde (3).

2. Système selon la revendication précédente, dans lequel le corps (9) est monté mobile en rotation dans ledit système.

3. Système selon l'une des revendications 1 à 2, dans lequel le guide d'onde (3) est monté mobile en rotation sur le corps.

4. Système selon l'une quelconque des revendications 1 à 3, dans lequel la zone de couplage du guide d'onde (3) est formée par au moins une partie de la face d'entrée du guide d'onde (3).

5. Système selon l'une quelconque des revendications 1 à 3, dans lequel la zone de couplage du guide d'onde (3) est formée par au moins une partie en forme de coude du guide d'onde.

6. Système selon la revendication précédente dans lequel la face d'entrée (31) du guide d'onde (3) est configurée pour que sa projection orthogonale dans un plan perpendiculaire à l'axe optique de la lentille (2) chevauche une projection orthogonale de ladite une au moins parmi la face d'entrée (21) de la lentille (2) et la face de sortie de la lentille (2) dans ledit plan perpendiculaire.

7. Système selon l'une quelconque des revendications précédentes, dans lequel la surface de sortie (33) du guide d'onde (3) est située sur un corps allongé (32) du guide d'onde (3).

8. Système selon l'une des revendications précédentes dans lequel la face d'entrée (31) du guide d'onde (3) présente une courbure concave dans un plan comportant la direction moyenne d'émission (11) de la source (1) et l'axe de rotation de la mobilité relative de la lentille (2) et du guide d'onde (3).

9. Système selon l'une des revendications précédentes, dans lequel la face d'entrée (31) du guide d'onde (3) est une surface située en regard d'une portion de la face de sortie (22) de la lentille (2).

10. Système selon les deux revendications précédentes en combinaison, dans lequel la face de sortie (22) de la lentille (2) est convexe et a une courbure identique à celle de la face d'entrée (31) du guide d'onde (3) dans un plan comportant la direction moyenne d'émission (11) de la source (1) et l'axe de rotation de la mobilité relative de la lentille (2) et du guide d'onde (3).

11. Système selon l'une des revendications 1 à 8, dans lequel la face d'entrée (31) du guide d'onde (3) est une surface située en regard d'une portion de la face d'entrée (21) de la lentille (2).

12. Système selon l'une des revendications précédentes, comprenant au moins un cache intermédiaire (4b) obturant une portion de la face de sortie (33) du guide d'onde (3).

13. Système selon l'une des revendications précédentes, configuré de manière à ce que le premier faisceau de sortie (5) soit un faisceau du type feu antibrouillard.

## Patentansprüche

1. Beleuchtungs- und/oder Signalgebungssystem für Kraftfahrzeuge, umfassend eine Lichtquelle (1), einen Körper (9), eine Linse (2), die so konfiguriert ist, dass sie über eine Eingangsfläche (21) direkt oder indirekt von der Quelle (1) kommende Lichtstrahlen empfängt und über eine Ausgangsfläche (22) einen ersten Ausgangsstrahl (5) aussendet, der über eine Ausgangsseite (22) eine erste regulierende Beleuchtungs-und/oder Signalgebungsfunktion ausführt, und einen Wellenleiter (3), der so konfiguriert ist, dass er über eine Eingangsfläche (31) direkt oder indirekt von der Quelle (1) kommende Lichtstrahlen empfängt, zum Emittieren eines zweiten Ausgangsstrahls (6) durch eine Ausgangsfläche (33) und zum Ablenken von Lichtstrahlen in den Leiter durch eine Kopplungszone, so dass sich diese Strahlen innerhalb des Leiters durch innere Totalreflexion ausbreiten, wobei die Kopplungszone des Wellenleiters (3) zumindest teilweise gegenüber einem Abschnitt entweder der Eingangsfläche (21) der Linse (2) oder der Ausgangsfläche (22) der Linse (2) angeordnet ist, wobei die Linse (2) und der Wellenleiter (3) an dem Körper (9) angebracht sind, **dadurch gekennzeichnet, dass** die Linse (2) an dem Körper angebracht ist so dass sie relativ zu dem Wellenleiter (3) drehbar ist.

2. Ein System nach dem vorstehenden Anspruch, bei dem der Körper (9) drehbar in diesem System montiert ist.

3. Ein System nach einem der Ansprüche 1 bis 2, bei dem der Wellenleiter (3) drehbar auf dem Körper montiert ist.

4. System nach einem der Ansprüche 1 bis 3, wobei der Kopplungsbereich des Wellenleiters (3) durch mindestens einen Teil der Eingangsfläche des Wellenleiters (3) gebildet wird.

5. System nach einem der Ansprüche 1 bis 3, wobei der Kopplungsbereich des Hohlleiters (3) durch mindestens einen biegeförmigen Abschnitt des Hohlleiters gebildet wird.

6. System nach dem vorhergehenden Anspruch, bei dem die Eingangsfläche (31) des Wellenleiters (3) so konfiguriert ist, dass ihre Orthogonalprojektion in einer Ebene senkrecht zur optischen Achse der Linse (2) eine Orthogonalprojektion von mindestens einer der Eingangsfläche (21) der Linse (2) und der Ausgangsfläche der Linse (2) in der genannten senkrechten Ebene überlappt.

7. System nach einem der vorstehenden Ansprüche, wobei sich die Ausgangsfläche (33) des Wellenleiters (3) auf einem länglichen Körper (32) des Wellenleiters (3) befindet.

8. System nach einem der vorstehenden Ansprüche, bei dem die Eingangsfläche (31) des Wellenleiters (3) eine konkave Krümmung in einer Ebene aufweist, die die mittlere Emissionsrichtung (11) der Quelle (1) und die Drehachse der relativen Beweglichkeit der Linse (2) und des Wellenleiters (3) umfaßt.

9. System nach einem der vorstehenden Ansprüche, wobei die Eingangsfläche (31) des Wellenleiters (3) eine Fläche ist, die einem Teil der Ausgangsfläche (22) der Linse (2) zugewandt ist.

10. System nach den beiden vorhergehenden Ansprüchen in Kombination, bei dem die Ausgangsfläche (22) der Linse (2) konvex ist und eine Krümmung aufweist, die identisch ist mit der Krümmung der Eingangsfläche (31) des Wellenleiters (3) in einer Ebene, die die mittlere Emissionsrichtung (11) der Quelle (1) und die Drehachse der relativen Beweglichkeit der Linse (2) und des Wellenleiters (3) enthält.

11. System nach einem der Ansprüche 1 bis 8, wobei die Eintrittsfläche (31) des Wellenleiters (3) eine Fläche ist, die einem Teil der Eintrittsfläche (21) der Linse (2) zugewandt ist.

12. System nach einem der vorstehenden Ansprüche, das mindestens eine Zwischenabdeckung (4b) aufweist, die einen Teil der Ausgangsfläche (33) des Wellenleiters (3) verschließt.

13. Ein System nach einem der vorstehenden Ansprüche, das so konfiguriert ist, dass der erste Ausgangsstrahl (5) ein Nebelscheinwerfertyp ist.

## Claims

1. Lighting and/or signalling system for motor vehicles, comprising a light source (1), a body (9), a lens (2) configured to receive light rays coming directly or indirectly from the source (1) via an input face (21) and to emit a first output beam (5) performing a first regulatory lighting and/or signalling function via an output face (22), and a waveguide (3) configured to receive directly or indirectly light rays coming from the source (1) via an input face (31), for emitting a second output beam (6) through an output surface (33) and for deflecting light rays into the guide through a coupling zone so that these rays propagate within the guide by total internal reflection, said coupling zone of the waveguide (3) being situated at least partly opposite a portion of one of the input face (21) of the lens (2) and the output face (22) of the lens (2), the lens (2) and the waveguide (3) being mounted on the body (9), **characterised in that** the lens (2) is mounted on the body which is rotatable relative to the waveguide (3).

2. A system according to the preceding claim, wherein the body (9) is rotatably mounted in said system.

3. A system according to one of claims 1 to 2, in which the waveguide (3) is rotatably mounted on the body.

4. A system according to any one of claims 1 to 3, wherein the coupling zone of the waveguide (3) is formed by at least a part of the input face of the waveguide (3).

5. A system according to any one of claims 1 to 3, wherein the coupling region of the waveguide (3) is formed by at least one bend-shaped portion of the waveguide.

6. A system according to the preceding claim wherein the input face (31) of the waveguide (3) is configured such that its orthogonal projection in a plane perpendicular to the optical axis of the lens (2) overlaps an orthogonal projection of at least one of the input face (21) of the lens (2) and the output face of the lens (2) in said perpendicular plane.

7. A system according to any of the foregoing claims, wherein the output surface (33) of the waveguide (3) is located on an elongated body (32) of the waveguide (3).

8. A system according to one of the preceding claims in which the input face (31) of the waveguide (3) has a concave curvature in a plane comprising the mean emission direction (11) of the source (1) and the axis of rotation of the relative mobility of the lens (2) and the waveguide (3).

9. A system according to one of the foregoing claims, wherein the input face (31) of the waveguide (3) is a surface facing a portion of the output face (22) of the lens (2).

10. System according to the two preceding claims in combination, in which the output face (22) of the lens (2) is convex and has a curvature identical to that of the input face (31) of the waveguide (3) in a plane comprising the mean direction of emission (11) of the source (1) and the axis of rotation of the relative mobility of the lens (2) and the waveguide (3).

11. A system according to one of claims 1 to 8, wherein the entrance face (31) of the waveguide (3) is a surface facing a portion of the entrance face (21) of the lens (2).

12. System according to one of the preceding claims, comprising at least one intermediate cover (4b) closing off a portion of the output face (33) of the waveguide (3).

13. A system according to one of the preceding claims, configured such that the first output beam (5) is a fog lamp type beam.
